# EUROPÄISCHE PATENTSCHRIFT

(11) **EP 3 303 711 B1**
(45) Veröffentlichungstag und Bekanntmachung des Hinweises auf die Patenterteilung: **14.04.2021**
(21) Anmeldenummer: 16724674.3
(22) Anmeldetag: 25.05.2016
(51) Int. Cl.: E02D 27/42, E02D 5/50, E02D 7/06, E02D 7/18, E02D 7/22, E02D 7/26

(54) **VERFAHREN ZUR GRÜNDUNG EINES TURMBAUWERKS SOWIE ONSHORE-TURMBAUWERK**
METHOD FOR CONSTRUCTING A FOUNDATION FOR A TOWER STRUCTURE, AND ONSHORE TOWER STRUCTURE
PROCÉDÉ DE RÉALISATION D'UNE FONDATION D'UNE TOUR ET TOUR SUR TERRE FERME

(30) Priorität: 27.05.2015 DE 102015209661
(43) Veröffentlichungstag der Anmeldung: 11.04.2018
(73) Patentinhaber: RWE Renewables GmbH, 45145 Essen (DE)
(72) Erfinder: BARTMINN, Daniel, 25335 Elmshorn (DE); MATLOCK, Benjamin, 20259 Hamburg (DE)
(74) Vertreter: Keenway Patentanwälte Neumann Heine Taruttis
(86) Internationale Anmeldenummer: PCT/EP2016/061811
(87) Internationale Veröffentlichungsnummer: WO 2016/189037

(56) Entgegenhaltungen:
- WO-A1-2005/005752
- DE-U1- 20 114 324
- GB-A- 2 475 305
- US-A1- 2013 255 169
- US-A1- 2014 126 964

## Beschreibung

Die Erfindung betrifft ein Verfahren zur Gründung eines Turmbauwerks mit einem bauwerksseitigen Anschlussprofil in Form eines Rohrsegments oder dergleichen.

Die Erfindung betrifft weiterhin ein Onshore-Turmbauwerk, welches mit dem zuvor erwähnten Verfahren errichtet wurde.

Die Erfindung betrifft insbesondere ein Verfahren zur Gründung eines Onshore-Turmbauwerks beispielsweise in Form einer Windkraftanlage. Windkraftanlagen umfassen in der Regel einen begehbaren Turm sowie eine auf dem Turm drehbar angeordnete Gondel mit einem Windkraftgenerator und einem Rotor. Der Turm besteht häufig aus mehreren Rohrschüssen oder Rohrsegmenten, welche aneinandergeflanscht sind. Der Turm wird üblicherweise auf einem Fundament errichtet, wobei Fundamente für sogenannte Onshore-Anlagen oder auf dem Festland aufgestellte Anlagen Flachgründungen sind, die aus Beton und Stahl bestehen. Das Fundament sichert den Turm beziehungsweise das Turmbauwerk vor dem Einsinken und vor dem Umfallen. Wenn der Turm nicht abgespannt ist, müssen die Querkräfte, die beim Betrieb des Windkraftgenerators auftreten, ebenfalls aufgenommen werden.

Bei Gründungen in einem verhältnismäßig weichen Baugrund ist es bekannt, diese als Pfahlgründungen auszuführen. Bei Pfahlgründungen werden ein oder mehrere Gründungspfähle in den Baugrund eingetrieben, beispielsweise durch Einvibrieren oder Einrammen oder als in situ Bohrpfähle.

Die Anbindung des Turms an das Fundament geschieht häufig durch ein sogenanntes Fundamenteinbauteil, welches mit einer Flanschverbindung zu einem Rohrsegment des Turms ausgestattet sein kann.

Auch ist es bekannt, Rammpfähle oder Vibrationspfähle als Teil des Fundaments bereitzustellen, die mit entsprechenden Anschlüssen zur Befestigung des Turmbauwerks versehen sind.

Das Rammen oder Einvibrieren von Gründungspfählen ist grundsätzlich mit dem Nachteil behaftet, dass etwa an diesen vorgesehene Anschlüsse so ausgebildet sein müssen, dass diese beim Rammen oder Vibrieren nicht in Mitleidenschaft gezogen werden. Gegebenenfalls müssen entsprechende Flanschverbindungen nachträglich angeschweißt werden, was verhältnismäßig aufwendig ist.

Eine aus der GB 2 475 305 A bekannte Windturbinenanlage besteht aus einem Turm und einer Tragkonstruktion, z.B. einem Einzelpfahl. Mindestens ein elastisches Mittel ist so angeordnet, dass es das Gewicht des Turms auf der Tragstruktur tragen kann. Das elastische Mittel kann eine Teller- oder Schraubenfeder, eine hydraulische Feder oder Stahlstabfeder oder eine elastische Unterlage aus z.B. Neopren oder Nylon sein und kann vorgespannt sein. Der Turm kann mit oder ohne Übergangselement mit dem elastischen Mittel dazwischen konzentrisch überlappend auf der Stützkonstruktion montiert werden, und die Verbindung kann hauptsächlich durch eine auf Zement basierende Vergussmasse gestützt werden, wobei das elastische Mittel im Falle eines Versagens der Vergussmasse überflüssig wird. Das elastische Element kann durch eine Stange zwischen Bügelpaaren mit elastischen Polstern abgestützt werden, die sich über die Ausschnitte der unteren Bügel erstrecken, um an der Oberseite der Stütze anzugreifen, und die Bügelpaare können um den Turm herum verteilt sein, z.B. sechs in 60-Grad-Abständen.

Aus der US 2013/255169 A1 ist weiterhin ein vorgespanntes Betonkappenfundament bekannt, das schraubenförmige Anker mit Rohren mit mehreren schraubenförmigen Scheiben hat, die um den Rohrumfang herum geschweißt sind, um Bohrungen tief in unterirdische Böden oder andere weiche Materialien mit Löchern im Rohr für Hochdruckverpressungen an Ort und Stelle durchzuführen. Die Wendelankerrohre sind mit einem Spannelement zum Ziehen und Vorspannen des Wendelankers gekoppelt. Die Wendelanker sind Zuganker, die in Druckanker umgewandelt werden können. Die Wendelanker auf Zug dienen dazu, die Fundamentkappe nach unten zu ziehen, um den darunterliegenden Boden zu komprimieren, während die Druckanker die maximale Setzung der Betonfundamentkappe begrenzen. Das Fundament umfasst auch umlaufende und innenliegende gewellte Metallrohre mit oberen und unteren horizontal verlaufenden radialen Muffenbolzen, die an den Rohren befestigt und vorgespannt werden, um eine seitliche Fundamentkompression zu gewährleisten.

Aus der WO 2005 005 752 A1 ist eine Gründung für ein Bauwerk mit mindestens einer pfahlförmigen Einrichtung bekannt, die in oder auf einem Boden verankert ist und im Wesentlichen aus einem länglichen Pfahlelement besteht, wobei die pfahlförmige Einrichtung weiterhin mindestens ein Verstärkungselement aufweist, das so ausgebildet und angeordnet ist, das zwischen dem Verstärkungselement und dem Pfahlelement ein Zwischenraum ausgebildet ist, der zumindest teilweise mit mindestens einem schütt- und/oder fließfähigen Füllmaterial verfüllbar ist.

Aus der US 2014/126964 A1 eine Methode zur Installation einer Stützsäule unter Wasser bekannt. Die Methode umfasst: (Schritt 1) Installieren einer Vielzahl von Stahlrohren, die in regelmäßigem Abstand auf dem Boden eines Ortes mit Wasser aufstehen; (Schritt 2) Einführen einer Bohrstange in jedes der Stahlrohre, um ein Grundgestein auszuheben, wobei ein Bohrmeißel an einem Endabschnitt der Bohrstange befestigt ist, und Befestigen der Bohrstange auf dem Grundgestein; und (Schritt 3) Einbringen und Aushärten eines Beschleunigungsmittels, das Beton oder Mörtel enthalt, in jedes der Stahlrohre. Die auf einer schwimmenden Platte montierte Solaranlage kann sicherer abgestützt werden, indem die Stützsäule fest installiert wird.

Außerdem ist aus der DE 201 14324 U1 eine Befestigungseinrichtung bekannt, mit der eine zumindest an ihrem Befestigungsende rohrförmig ausgebildete _Stange wie beispielsweise ein Mast, Pfahl oder Pfosten, auf einer Aufstellebene lösbar befestigt ist, mit einem aus der Aufstellebene herausragenden Aufsteckdorn, auf den das Befestigungsende der Stange aufgesteckt ist, wobei die Querabmessung des Aufsteckdorns geringer ist als die innere Querabmessung der Stange, derart, dass zwischen dem Aufsteckdorn und der Stange ein Ringraum ausgebildet ist. In dem Ringraum befindet sich zwischen dem Aufsteckdorn und der Stange ein kerniges Füllgut.

Der Erfindung liegt die Aufgabe zugrunde, ein Verfahren zur Gründung eines Turmbauwerks, insbesondere eines Onshore-Turmbauwerks, bereitzustellen, mit dem eine besonders einfache Verbindung eines bauwerksseitigen Anschlussprofils mit dem Fundament möglich ist.

Der Erfindung liegt weiterhin die Aufgabe zugrunde, ein sprechendes Turmbauwerk bereitzustellen.

Die Aufgabe wird gelöst mit den Merkmalen der Ansprüche 1, 10 und 13. Vorteilhafte Ausgestaltungen der Erfindung ergeben sich aus den Unteransprüchen.

Die Erfindung betrifft weiterhin ein Verfahren zur Gründung eines Turmbauwerks mit wenigstens einem bauwerksseitigen Anschlussprofil in Form eines Rohrsegments, wobei das Rohrsegment mit einer aushärtbaren Vergussmasse teilweise verfüllt wird, wobei das Verfahren folgende Schritte umfasst:
- Bereitstellen mehrerer Gründungspfähle ausgewählt aus einer Gruppe umfassend Rohrprofile, T-Profile, I-Profile, Z-Profile oder andrer Gründungspfähle in Form von Spundwandsegmenten,
- Eintreiben mehrerer Gründungspfähle in einen tragfähigen Baugrund, wobei das Verfahren des Eintreibens ausgewählt ist aus einer Gruppe umfassend Einvibrieren, Einrammen, Einbohren oder Kombinationen daraus, wobei mehrere Gründungspfähle auf einem co-axial zur Längsachse des Turmbauwerks angeordneten Kreisbogen in den Baugrund eingetrieben werden, und
- Ausrichten sowie Festlegen des Rohrsegments co-axial und konzentrisch zu der Anordnung von mehreren Gründungspfählen.

Die Erfindung betrifft weiterhin ein Verfahren zur Gründung eines Turmbauwerks mit einem bauwerksseitigen Anschlussprofil in Form eines Rohrsegments, wobei das Verfahren folgende Schritte umfasst:
- Bereitstellen eines Gründungspfahls ausgewählt aus einer Gruppe umfassend Rohrprofile, T-Profile, I-Profile, Z-Profile oder Bereitstellen eines Gründungspfahls in Form von Spundwandsegmenten,
- Eintreiben des einzigen Gründungspfahls in einen tragfähigen Baugrund, wobei das Verfahren des Eintreibens ausgewählt ist aus einer Gruppe umfassend Einvibrieren, Einrammen, Einbohren oder Kombinationen daraus, wobei der einzige Gründungspfahl in einer Längsachse des Turmbauwerks in den Baugrund eingetrieben werden,
- Ausrichten sowie Festlegen des Rohrsegments co-axial und konzentrisch zu dem in den Baugrund eingebrachten einzigen Gründungspfahl und
- teilweise Verfüllen des Rohrsegments mit einer aushärtbaren Vergussmasse,
wobei das Rohrsegment co-axial und konzentrisch zu dem einzigen Gründungspfahl so ausgerichtet und festgelegt wird, wobei zwischen dem Rohrsegment und dem einzigen Gründungspfahl ein Ringraum gebildet wird, wobei der Ringraum mit der aushärtbaren Vergussmasse verfüllt wird. Das Rohrsegment wird vor dem Verfüllen des Ringraums mit der Vergussmasse auf dem Baugrund abgestützt und die Gründung erfolgt onshore.

Das Anschlussprofil beziehungsweise Rohrsegment kann aus Stahl, Stahlbeton oder Polymerbeton bestehen oder als Hybridelement aus Stahl und Beton ausgebildet sein. Das Rohrsegment muss nicht notwendigerweise über seine Höhe einen gleichbleibenden Querschnitt aufweisen, vielmehr kann dieses auch eine hyperboloide oder konische Mantelfläche aufweisen. Der Gründungspfahl kann aus Stahl bestehen und einen zylindrischen Pfahlmantel aufweisen. Dieser kann über eine Teillänge in den Baugrund einvibriert werden, über eine weitere Teillänge kann dieser in den Baugrund eingerammt werden. Beispielsweise kann der Gründungspfahl über eine erste Teillänge in den Baugrund einvibriert werden und über eine weitere Teillänge in den Baugrund eingerammt werden. Zum Einvibrieren kommt vorzugsweise ein Vibrator in Betracht, zum Einrammen kann ein Rammbär oder eine Schlagramme Anwendung finden.

Anstelle eines einzigen Gründungspfahls mit einem zylindrischen Pfahlmantel können mehrere Gründungspfähle ausgewählt aus einer Gruppe umfassend Rohrprofile, T-Profile, I-Profile, Z-Profile, W-Profile oder ähnlich gestaltete Spundwandsegmente vorgesehen sein. Eine Vielzahl von Gründungspfählen werden dabei auf einem Kreisbogen in den Baugrund eingetrieben.

Das Festlegen des Rohrsegments des Turmbauwerks kann temporär erfolgen, bis die Vergussmasse so ausgehärtet ist und eine solche Verbindung zwischen dem Gründungspfahl und dem Rohrsegment hergestellt hat, dass die axialen und lateralen Kräfte des Turmbauwerks über die Vergussmasse in den Baugrund abgetragen werden können.

Das Verfahren gemäß der Erfindung hat den Vorzug, dass ein Lastabtrag ausschließlich über die Vergussmasse erfolgen kann, so dass der Gründungspfahl beispielsweise ohne einen entsprechenden Verbindungsflansch ausgestaltet werden kann.

Der Erfindung liegt der Gedanke zugrunde, eine belastbare Verbindung zwischen Bauwerk und Fundament ausschließlich über eine aushärtbare Vergussmasse bereitzustellen, was die Verbindung des Bauwerks mit dem Fundament wesentlich erleichtert. Darüber hinaus wird auch die Erstellung des Fundaments vereinfacht. Die Gründung kann ausschließlich über einen oder mehrere Gründungspfähle erfolgen, besondere mechanische Konstruktionen wie etwa Flansch- oder Doppelflanschverbindungen sind entbehrlich.

Die aushärtbare Vergussmasse wird vorzugsweise ausgewählt aus einer Gruppe umfassend mineralische Vergussmassen, bituminöse Vergussmassen, Betone, Polymerbetone, faserverstärkte Polymere etc.

Bei einer zweckmäßigen Ausgestaltung des Verfahrens gemäß der Erfindung ist vorgesehen, dass das Rohrsegment co-axial und konzentrisch zu einem einzigen Gründungspfahl oder zu der Anordnung von Gründungspfählen so ausgerichtet und festgelegt wird, dass zwischen dem Rohrsegment und dem Gründungspfahl oder den Gründpfählen ein Ringraum gebildet wird, wobei der Ringraum mit der aushärtbaren Vergussmasse verfüllt wird.

Bei einer Variante des Verfahrens gemäß der Erfindung ist vorgesehen, dass das Rohrsegment vor dem Verfüllen der Vergussmasse auf dem Gründungspfahl oder den Gründungspfählen abgestützt wird.

Eine solche Abstützung kann über eine Vielzahl von an dem Rohrsegment vorgesehenen Stützkonsolen erfolgen, über welche das Rohrsegment auf dem Gründungspfahl abgesetzt werden kann.

Solche Stützkonsolen können beispielsweise über den Umfang verteilt auf dem Innenumfang des Rohrsegments angeordnet sein.

Das Rohrsegment kann einen größeren Durchmesser als der Gründungspfahl oder die Anordnung von Gründungspfählen aufweisen, alternativ kann der Gründungspfahl einen größeren Durchmesser als das Rohrsegment aufweisen.

Bei einer besonders zweckmäßigen und vorteilhaften Ausgestaltung des Verfahrens ist vorgesehen, dass ein flanschlos ausgebildeter Gründungspfahl Anwendung findet. Der Gründungspfahl kann als einfaches zylindrisches Stahlrohrsegment ausgebildet sein.

Bei einer vorteilhaften Variante des Verfahrens gemäß der Erfindung ist vorgesehen, nur einen einzigen Gründungspfahl in den Baugrund einzutreiben, der einen entsprechenden Durchmesser aufweist.

Auf diese Art und Weise wird ein Anschluss des Turmbauwerks als Rohr in Rohr-Anschluss hergestellt, bei welchem der hierdurch gebildete Ringraum mit der Vergussmasse verfüllt wird. Überraschenderweise hat sich herausgestellt, dass die Mantelreibung zwischen der Vergussmasse und dem Rohrsegment und die Mantelreibung zwischen der Vergussmasse und dem Gründungspfahl ausreicht, um eine tragfähige Verbindung zwischen dem Rohrsegment und dem Gründungspfahl herzustellen.

Etwa vorgesehene Stützkonsolen innerhalb des Rohrsegments des Turmbauwerks können in diesem verbleiben oder nach Aushärtung der Vergussmasse wieder entfernt werden.

Zwecks exakter Ausrichtung des Rohrsegments des Turmbauwerks kann vorgesehen sein, dass das Rohrsegment im Bereich seiner Abstützung auf dem Gründungspfahl mit Distanzstücken unterlegt wird.

Bei einer alternativen Variante des Verfahrens gemäß der Erfindung kann vorgesehen sein, dass das Rohrsegment vor dem Verfüllen des Ringraums auf dem Baugrund abgestützt wird. In diesem Falle werden Stützkonsolen innerhalb des Rohrsegments nicht benötigt. Das Rohrsegment kann beispielsweise mittelbar über entsprechende Distanzstücke auf dem Baugrund abgesetzt werden. Als Distanzstücke können einfach Ausgleichselemente, sogenannte Shims, vorgesehen werden. Alternativ können als Distanzstücke auch hydraulisch verstellbare Stützen vorgesehen sein. Solche würden eine Feinjustage beziehungsweise Feinausrichtung des Rohrsegments nach dem Absetzen und vor und/oder während des Vergießens ermöglichen.

Bei einer vorteilhaften Variante des Verfahrens ist vorgesehen, dass der Durchmesser des Rohrsegments größer gewählt wird als der Durchmesser des Gründungspfahls.

Vorzugsweise erfolgt die Gründung onshore.

Bei einer zweckmäßigen Variante des Verfahrens gemäß der Erfindung ist vorgesehen, dass das Rohrsegment mit Abstand zum Baugrund auf dem Gründungspfahl oder den Gründungspfählen aufgestützt wird, beispielsweise mittels innerhalb des Rohrsegments angeordneter Stützkonsolen. Das Rohrsegment wird dann zweckmäßigerweise so auf den Gründungspfahl oder die Anordnung von Gründungspfählen aufgesetzt, dass es diesen von außen umschließt.

Der zwischen dem Rohrsegment und dem Gründungspfahl oder die Anordnung von Gründungspfählen entstandene Ringraum kann beispielsweise auf der dem Baugrund zugewandten Seite abgedichtet sein. Sodann erfolgt das Vergießen des Ringraums. Beispielsweise kann ein Rohrsegment mit einer einseitig innen hervorstehenden umlaufenden Dichtlippe vorgesehen sein, die bei Aufsetzen des Rohrsegments auf dem Gründungspfahl oder den Gründungspfählen den Gründungspfahl oder die Anordnung von Gründungspfählen umschließt.

Das Onshore-Turmbauwerk der Erfindung umfasst ein bauwerkseitiges Anschlussprofil in Form eines Rohrsegments und mehrere in einen Baugrund eingetriebene Gründungspfähle ausgewählt aus einer Gruppe umfassend Rohrprofile, T-Profile, I-Profile, Z-Profile oder andere Gründungspfähle in Form von Spundwandsegmenten, wobei das Rohrsegment und mehrere Gründungspfähle einander unter Bildung eines Ringraums umschließen und wobei das Rohrsegment wenigstens teilweise mit einer ausgehärteten Vergussmasse verfüllt ist. Das Rohrsegment muss keinen gleichbleibenden Durchmesser aufweisen, vielmehr kann dieses eine zylindrische, konische oder hyperboloide Mantelfläche aufweisen.

Das Rohrsegment kann so auf den Gründungspfahl oder auf die Anordnung von Gründungspfählen aufgesetzt sein, dass es an dem Gründungspfahl oder an den Gründungspfählen mit Abstand zum Baugrund befestigt ist.

Das Rohrsegment kann beispielsweise über Stützkonsolen an dem Gründungspfahl oder den Gründungspfählen abgestützt sein, wobei die Stützkonsolen nur zum temporären Lastabtrag in den Gründungspfahl oder in die Gründungspfähle beziehungsweise in den Baugrund vorgesehen sind.

Der Gründungspfahl ist zweckmäßigerweise flanschlos ausgebildet.

Die Erfindung wird nachstehend unter Bezugnahme auf die in den beigefügten Zeichnungen dargestellten Ausführungsbeispielen erläutert.

Es zeigen:
- Figur 1:: eine Schnittansicht durch ein Anschlussprofil eines Turmbauwerks im Bereich seiner Gründung, wobei die Verbindung zwischen dem Anschlussprofil und einem Gründungspfahl ein erstes Ausführungsbeispiel der Erfindung betrifft,
- Figur 2:: eine zweite Variante der Verbindung des Turmbauwerks mit dem Fundament gemäß der Erfindung,
- Figur 3:: eine weitere Variante der Verbindung des Turmbauwerks mit dem Fundament,
- Figur 4:: eine vierte Variante der Gründung des Turmbauwerks gemäß der Erfindung und
- Figur 5: eine fünfte Variante der Gründung des Turmbauwerks gemäß der Erfindung.

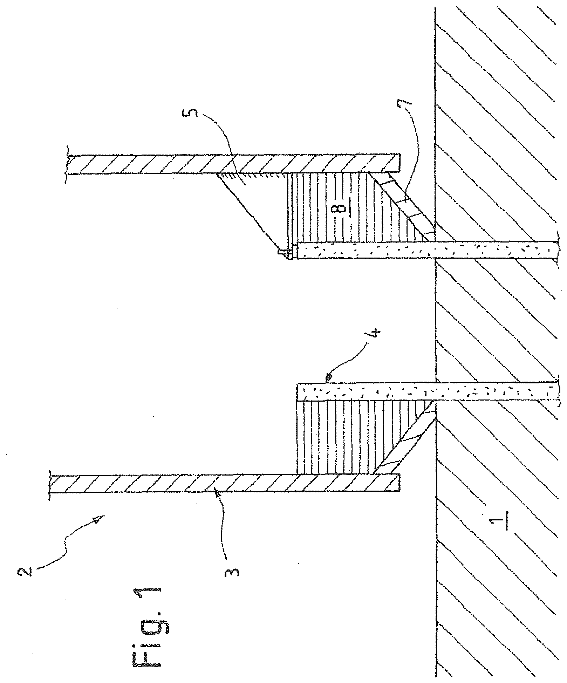

Es wird zunächst Bezug genommen auf das Ausführungsbeispiel gemäß Figur 1. Figur 1 zeigt einen Teilschnitt eines in einem Baugrund 1 befestigten Turmbauwerks 2, wobei von dem Turmbauwerk 2 nur das unterste Rohrsegment 3 dargestellt ist. Dieses Rohrsegment 3 ist als Anschlussprofil des Turmbauwerks 2 ausgebildet.

Bei dem beschriebenen Ausführungsbeispiel ist zumindest das dargestellte, als Anschlussprofil ausgebildete untere Rohrsegment 3 als zylindrisches Stahlrohrsegment ausgebildet. Dieses ist über einen Gründungspfahl 4 im Baugrund 1 verankert. Auch von dem Gründungspfahl 4 ist nur ein Teilstück dargestellt. Der Gründungspfahl, der erfindungsgemäß als flanschloses, zylindrisches Stahlprofil ausgebildet ist, wurde mittels Vibrieren und/oder Schlagrammen in den Baugrund 1 eingetrieben.

Bei dem in Figur 1 dargestellten Ausführungsbeispiel der Erfindung hat der Gründungspfahl 4 einen kleineren Durchmesser als das Rohrsegment 3, welches als Teil eines sogenannten Monopile-Turmbauwerks zur Aufnahme eines Windkraftgenerators ausgebildet sein kann. Das Rohrsegment 3 kann beispielsweise einen üblichen Durchmesser von etwa 4 bis 5 Metern aufweisen.

Der Gründungspfahl 4 ist über einen wesentlichen Teil seiner Länge in dem Baugrund 1 eingespannt, ein geringerer Teil seiner Länge ragt über den Baugrund 1 hinaus.

Das Rohrsegment 3 wurde konzentrisch und koaxial zu dem Gründungspfahl 4 zu diesem angeordnet und beispielsweise über Stützkonsolen 5 am Innenumfang des Rohrsegments auf dem Gründungspfahl 4 abgesetzt. In der Darstellung gemäß Figur 1 ist nur eine Stützkonsole 5 abgebildet, am Innenumfang des Rohrsegments 3 sind zweckmäßigerweise wenigstens drei Stützkonsolen 5 mit gleichem Abstand zueinander auf gleicher Höhe angeordnet. Zwischen den Stützkonsolen 5 und der Stirnfläche des Gründungspfahls 4 können eines oder mehrere Distanzstücke zwecks Nivellierung des Rohrsegments 3 bezüglich des Gründungspfahls 4 angeordnet sein.

Das Rohrsegment 3 ist so auf dem Gründungspfahl 4 abgestützt, dass dieses mit seinem freien Ende mit Abstand zum Baugrund 1 angeordnet ist. Zwischen dem Rohrsegment 3 und dem Gründungspfahl 4 ergibt sich ein Ringraum 6, der nach dem Ausrichten des Rohrsegments 3 bezüglich des Gründungspfahls 4 mit einer aushärtbaren Vergussmasse 8 vergossen wurde. Hierzu ist das untere freie Ende des Rohrsegments 3 mittels einer einwärts gerichteten umlaufenden Dichtlippe 7 verschlossen. Die Vergussmasse 8 wurde von oben in das Rohrsegment 3 beziehungsweise in den Ringraum 6 zwischen dem Rohrsegment 3 und dem Gründungspfahl 4 eingefüllt, die Dichtlippe 7 verhindert das Austreten der Vergussmasse 8 bis zu deren Verfestigung.

Nach der Verfestigung der Vergussmasse 8 können sodann auf das Rohrsegment 3 weitere Segmente des Turmbauwerks 2 aufgesetzt werden. Die Segmente des Turmbauwerks 2 sind vorzugsweise über innen umlaufende Flanschverbindungen aneinander angeflanscht. Aus Gründen der Vereinfachung ist der weitere Verlauf des Turmbauwerks 2 in Figur 1 nicht dargestellt.

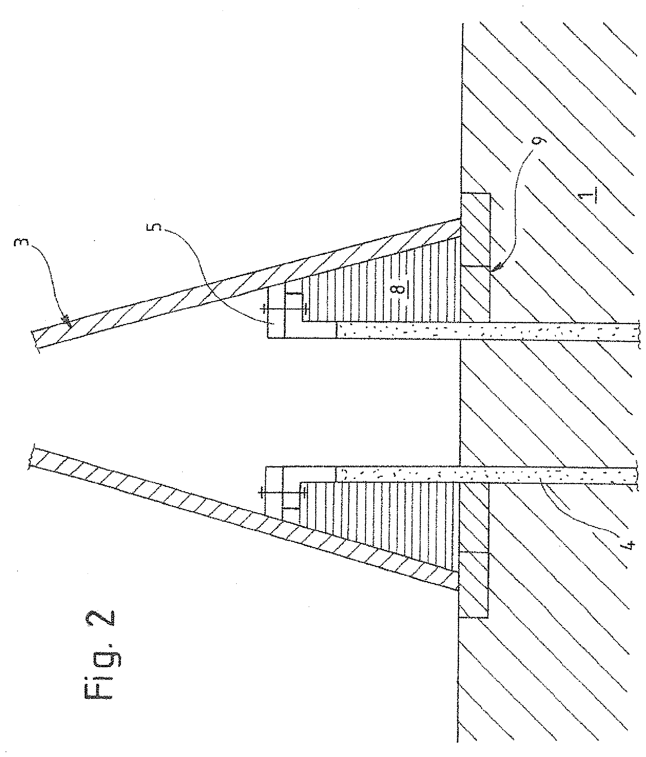

Figur 2 zeigt ein zweites Ausführungsbeispiel eines Turmbauwerks 2 gemäß der Erfindung. In den folgenden Figuren sind gleiche Bauteile mit gleichen Bezugszeichen versehen.

Bei dem in Figur 2 dargestellten Ausführungsbeispiel besitzt das Rohrsegment 3 des Turmbauwerks 2 einen konischen Querschnitt. Dieses verbreitert sich hin zu seiner Aufstellfläche. Darüber hinaus ist das Rohrsegment 3 auf einem Fundamentsockel 9 aufgesetzt, der aus verschieden mit Abstand zueinander angeordneten Sockelelementen bestehen kann, aber auch als ringförmiges einstückiges Sockelelement ausgebildet sein kann. Der Fundamentsockel 9 dient nur zur temporären Abstützung des Rohrsegments. Bei dieser Variante der Gründung ist ebenfalls das Rohrsegment 3 konzentrisch und koaxial zu dem in den Baugrund 1 eingetriebenen Gründungspfahl 4 angeordnet. Der Ringraum 6 zwischen dem Rohrsegment 3 und dem Gründungspfahl 4 ist ebenfalls mit einer aushärtbaren Vergussmasse 8 verfüllt.

Bei Abstützung des Rohrsegments 3 auf dem Baugrund erfolgt zunächst ein Lastabtrag über den Fundamentsockel 9 sowie gegebenenfalls über zusätzlich am Innenumfang des Rohrsegments 3 vorgesehene Stützkonsolen 5. Bei Errichtung des Turmbauwerks 2 nehmen diese provisorischen Stützmaßnahmen nur die Gewichtskraft des Rohrsegments 3 auf. Wenn die Vergussmasse 8 ausgehärtet ist, wird auf das Rohrsegment aufgebaut, bis schließlich beispielsweise ein Windkraftgenerator auf das Turmbauwerk 2 aufgesetzt ist. Der Lastabtrag der gesamten Masse des Turmbauwerks 2 erfolgt dann über die Mantelreibung zwischen dem Rohrsegment 3 und der Vergussmasse 8 sowie zwischen der Vergussmasse 8 und dem Gründungspfahl 4. Der Fundamentsockel 9 sowie die Stützkonsolen 5 müssen daher nur für eine geringe axial wirkende Teillast ausgelegt sein.

Alternativ ist vorgesehen, die Fundamentsockel 9 für die tatsächlichen Betriebslasten auszulegen.

Da bei dem Ausführungsbeispiel gemäß Figur 2 das Rohrsegment 3 unmittelbar an den Baugrund 1 anschließt, sind separate Abdichtmaßnahmen, die ein Austreten der Vergussmasse verhindern, nicht notwendig.

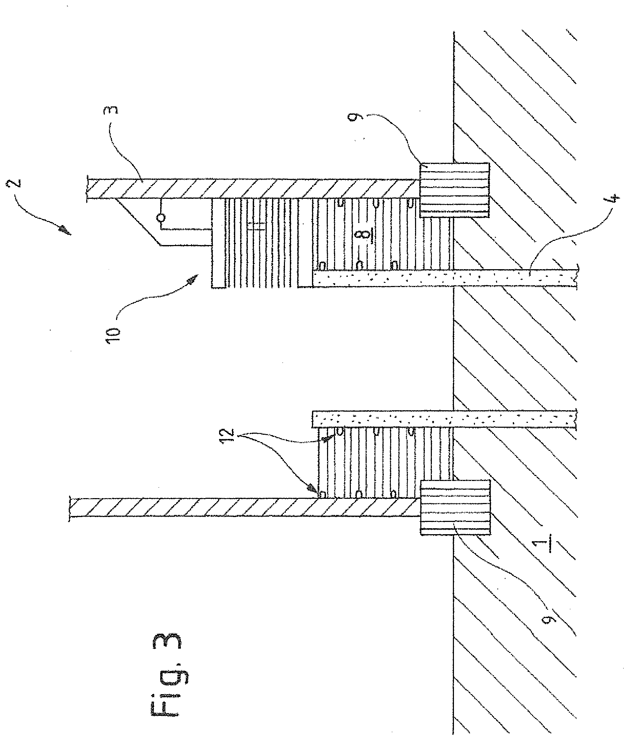

Eine weitere Variante des erfindungsgemäßen Turmbauwerks ist in Figur 3 dargestellt. Diese Variante entspricht im Wesentlichen der in Figur 2 dargestellten Variante, wobei das Rohrsegment 3 als zylindrisches Stahlrohrsegment ausgebildet ist und dieses ebenfalls über Fundamentsockel 9 auf dem Bauuntergrund abgestützt ist. Darüber hinaus sind am Innenumfang des Rohrsegments 3 mehrere Stützlager 10 befestigt, die sich auf dem Gründungspfahl 4 abstützen und die zwecks Justage des Rohrsegments 3 höhenverstellbar ausgebildet sind. Aus Vereinfachungsgründen ist in der Zeichnung nur ein einziges Stützlager 10 dargestellt, welches mehrteilig ist und einen Höhenausgleich mittels sogenannter Shims 11 ermöglicht.

Zu Erhöhung der Mantelreibung zwischen dem Rohrsegment 3 und dem Gründungspfahl 4 sind sowohl auf der Innenseite des Rohrsegments 3 als auch auf der Außenseite des Gründungspfahls 4 Scheerdübel 12 vorgesehen.

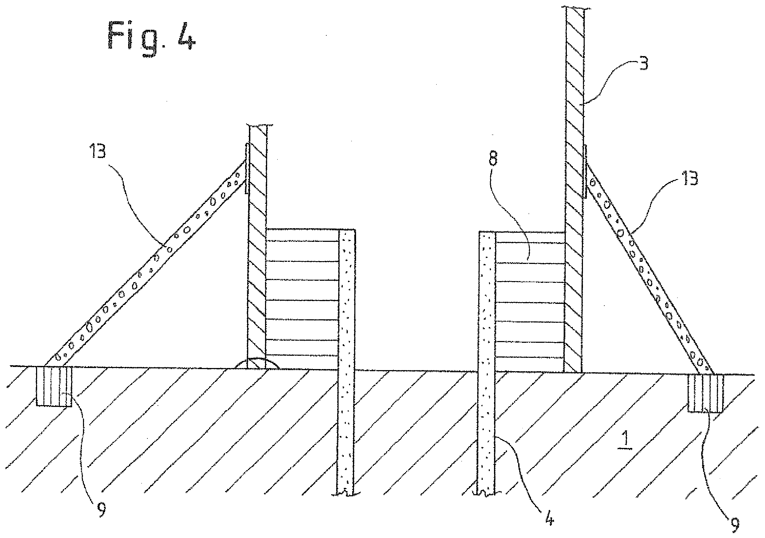

Bei dem in Figur 4 dargestellten Ausführungsbeispiel ist das Rohrsegment unmittelbar auf dem Baugrund 1 abgesetzt. Im Übrigen ist das Rohrsegment 3 zylinderförmig ausgebildet und bildet mit dem Gründungspfahl 4 in der zuvor beschriebenen Art und Weise einen Ringraum 6. Eine temporäre Abstützung des Rohrsegments 3 erfolgt über am Außenumfang des Rohrsegments 3 angeordnete Strebpfeiler 13, die sich ihrerseits auf Fundamentsockeln 9 abstützen. Anstelle von diskret am Außenumfang des Rohrsegments abgestützten Strebpfeilern 13 kann auch ein umlaufender Stützkragen das Rohrsegment 3 vollständig umschließen. Die Strebpfeiler 13 sind als sich vom Baugrund 1 schräg in Richtung auf das Rohrsegment 3 erstreckende Stützen oder Streben ausgebildet, die beispielsweise nicht mit dem Rohrsegment 3 verbunden sind, sondern nur gegen dieses abgestützt sind. Die Strebpfeiler 13 können aus Beton oder Stahl ausgebildet sein, diese können gegebenenfalls auch längenverstellbar ausgebildet sein.

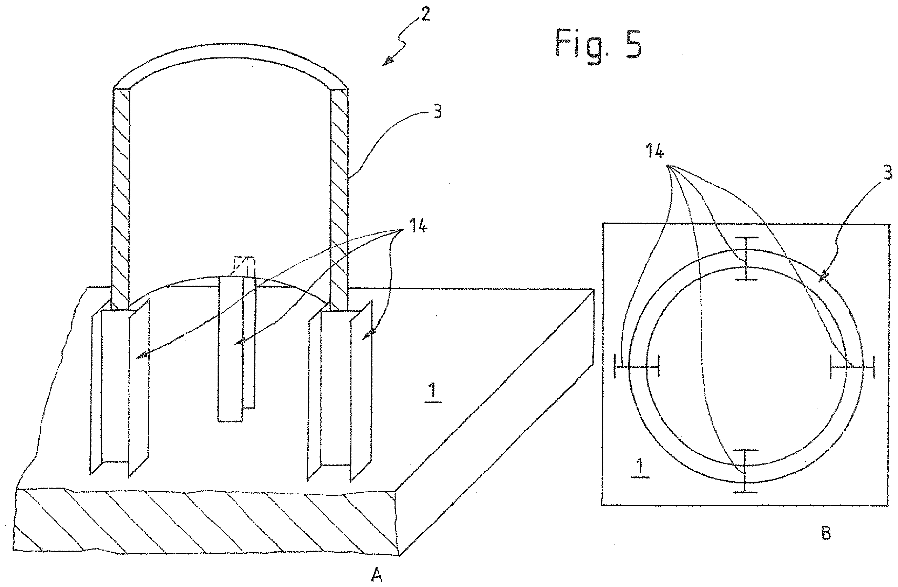

Eine weitere Variante des Verfahrens ist in Figur 5 dargestellt, wobei die Figur 5A eine perspektivische, teilweise geschnittene Ansicht des Turmbauwerks 2 im Bereich des unteren Rohrsegments darstellt und die Figur 5B eine Draufsicht auf die Anordnung gemäß Figur 5A zeigt.

Anstelle eines einzigen Gründungspfahls 4 sind bei dieser Verfahrensvariante mehrere Spundwandsegmente 14 als Gründungspfähle in Form von I-Profilen auf einem Kreisbogen in den Baugrund 1 eingetrieben worden. Das Rohrsegment 3 wird auf den Stirnflächen der Spundwandsegmente 14 abgesetzt bzw. abgestützt, sodann wird ein Teil des Rohrsegments mit einer aushärtbaren Vergussmasse verfüllt. Bei dem Ausführungsbeispiel gemäß der Figuren 5A und 5B kann das Rohrsegment 3 mit Abstand zum Baugrund 1 von den Spundwandsegmenten 14 getragen sein. In diesem Fall ist eine zusätzliche temporäre Abdichtung zwischen dem Rohrsegment 3 und dem Baugrund 1 vorzusehen, um zu verhindern, dass die in das Rohrsegment 3 eingeführt Vergussmasse nicht ausläuft. Alternativ können die Spundwandsegmente 14 soweit in den Baugrund 1 eingetrieben worden sein, dass das Rohrsegment 3 an den Baugrund 1 so anschließt, dass keine Vergussmasse austritt.

Bei dem in Figur 5 dargestellten Ausführungsbeispiel sind die Spundwandsegmente 14 mit verhältnismäßig großem Abstand zueinander auf einem Kreisbogen angeordnet. Insgesamt sind vier Spundwandsegmente 14 vorgesehen, deren Profilstege jeweils radial auswärts zeigen, alternativ kann eine Vielzahl von Gründungspfählen 4 beispielsweise auch in Form von Spundwandsegmenten 14 oder anders ausgebildeten Profilen auf einem im Wesentlichen geschlossenen Kreisbogen angeordnet sein, wobei das Rohrsegment 3 diesen Kreisbogen umschließen kann, sodass zwischen den Gründungspfählen 4 bzw. Spundwandsegmenten 14 und dem Rohrsegment 3 ein Ringraum gebildet wird, der dann mit der aushärtbaren Vergussmasse verfüllt wird.

### Bezugszeichenliste

- 1: Baugrund
- 2: Turmbauwerk
- 3: Rohrsegment
- 4: Gründungspfahl
- 5: Stützkonsolen
- 6: Ringraum
- 7: Dichtlippe
- 8: Vergussmasse
- 9: Fundamentsockel
- 10: Stützlager
- 11: Shims
- 12: Scheerdübel
- 13: Strebpfeiler
- 14: Spundwandsegmente

## Patentansprüche

1. Verfahren zur Gründung eines Turmbauwerks (2) mit wenigstens einem bauwerksseitigen Anschlussprofil in Form eines Rohrsegments (3), wobei das Rohrsegment (3) mit einer aushärtbaren Vergussmasse (8) teilweise verfüllt wird, **dadurch gekennzeichnet, dass** das Verfahren folgende Schritte umfasst:
- Bereitstellen mehrerer Gründungspfähle ausgewählt aus einer Gruppe umfassend Rohrprofile, T-Profile, I-Profile, Z-Profile oder andere Gründungspfähle in Form von Spundwandsegmenten (14) ,
- Eintreiben mehrerer Gründungspfähle (4) in einen tragfähigen Baugrund (1), wobei wobei der Verfahrensschritt des
Eintreibens ausgewählt ist aus einer Gruppe umfassend Einvibrieren, Einrammen, Einbohren oder Kombinationen daraus, wobei mehrere Gründungspfähle auf einem co-axial zur Längsachse des Turmbauwerks (2) angeordneten Kreisbogen in den Baugrund eingetrieben werden, und
- Ausrichten sowie Festlegen des Rohrsegments (3) co-axial und konzentrisch zu der Anordnung von mehreren Gründungspfählen (4).

2. Verfahren nach Anspruch 1, **dadurch gekennzeichnet, dass** das Rohrsegment (3) co-axial und konzentrisch zu einem einzigen Gründungspfahl (4) oder zu der Anordnung von Gründungspfählen (4) so ausgerichtet und festgelegt wird, dass zwischen dem Rohrsegment (3) und dem Gründungspfahl (4) oder den Gründungspfählen (4) ein Ringraum (6) gebildet wird, wobei der Ringraum (4) mit der aushärtbaren Vergussmasse (8) verfüllt wird.

3. Verfahren nach einem der Ansprüche 1 oder 2, **dadurch gekennzeichnet, dass** das Rohrsegment (3) vor dem Verfüllen mit der Vergussmasse (8) auf den Gründungspfählen (4) abgestützt wird, dass das Rohrsegment (3) mit einer Vielzahl von Stützkonsolen (5) versehen wird, über welche eine Abstützung auf den Gründungspfählen (4) erfolgt.

4. Verfahren nach einem der Ansprüche 1 bis 3, **dadurch gekennzeichnet, dass** die Gründungspfähle (4) flanschlos ausgebildet sind.

5. Verfahren nach einem der Ansprüche 1 bis 4, **dadurch gekennzeichnet, dass** das Rohrsegment (3) im Bereich seiner Abstützung zwecks Ausrichtung mit Distanzstücken unterlegt wird.

6. Verfahren nach Anspruch 2, **dadurch gekennzeichnet, dass** das Rohrsegment (3) vor dem Verfüllen des Ringraums (6) mit der Vergussmasse (8) auf dem Baugrund (1) abgestützt wird.

7. Verfahren nach einem der Ansprüche 1 bis 6, **dadurch gekennzeichnet, dass** der Durchmesser des Rohrsegments (3) größer als der Durchmesser des von den Gründungspfählen (4) eingeschlossenen Kreisbogens ist.

8. Verfahren nach einem der Ansprüche 1 bis 7, **dadurch gekennzeichnet, dass** die Gründung onshore erfolgt.

9. Verfahren nach einem der Ansprüche 1 bis 5 oder 7 oder 8, **dadurch gekennzeichnet, dass** das Rohrsegment (3) mit Abstand zum Baugrund (1) auf den Gründungspfählen (4) abgestützt wird.

10. Onshore-Turmbauwerk, erstellt mit dem Verfahren nach einem der Ansprüche 1 bis 9, umfassend ein bauwerksseitiges Anschlussprofil in Form eines Rohrsegments (3) und mehrere in einen Baugrund (1) eingetriebene Gründungspfähle (4) ausgewählt aus einer Gruppe umfassend Rohrprofile, T-Profile, I-Profile, Z-Profile oder andere Gründungspfähle in Form von Spundwandsegmenten (14), wobei das Rohrsegment und die mehreren Gründungspfähle einander unter Bildung eines Ringraums umschließen und wobei das Rohrsegment (3) wenigstens teilweise mit einer ausgehärteten Vergussmasse (8) verfüllt ist.

11. Onshore-Bauwerk nach Anspruch 10, **dadurch gekennzeichnet, dass** das Rohrsegment (3) mit Abstand zu dem Baugrund (1) an dem Gründungspfahl oder an den Gründungspfählen (4) befestigt ist und/oder dass das Rohrsegment (3) über Stützkonsolen (5) auf dem oder den Gründungspfählen (4) abgestützt ist.

12. Onshore-Bauwerk nach einem der Ansprüche 10 oder 11, **dadurch gekennzeichnet, dass** die Gründungspfähle (4) flanschlos ausgebildet sind.

13. Verfahren zur Gründung eines Turmbauwerks (2) mit einem bauwerksseitigen Anschlussprofil in Form eines Rohrsegments (3), wobei das Verfahren folgende Schritte umfasst:
Bereitstellen eines Gründungspfahls ausgewählt aus einer Gruppe umfassend Rohrprofile, T-Profile, I-Profile, Z-Profile oder Bereitstellen eines Gründungspfahls in Form von Spundwandsegmenten (14),
- Eintreiben des einzigen Gründungspfahls (4) in einen tragfähigen Baugrund (1), wobei der Verfahrensschritt des Eintreibens ausgewählt ist aus einer Gruppe umfassend Einvibrieren, Einrammen, Einbohren oder Kombinationen daraus, wobei der einzige Gründungspfahl (4) in einer Längsachse des Turmbauwerks (2) in den Baugrund eingetrieben werden,
- Ausrichten sowie Festlegen des Rohrsegments (3) co-axial und konzentrisch zu dem in den Baugrund (1) eingebrachten einzigen Gründungspfahl (4) und
- teilweise Verfüllen des Rohrsegments (3) mit einer aushärtbaren Vergussmasse (8),
wobei das Rohrsegment (3) co-axial und konzentrisch zu dem einzigen Gründungspfahl (4) so ausgerichtet und festgelegt wird, dass zwischen dem Rohrsegment (3) und dem einzigen Gründungspfahl (4) ein Ringraum gebildet wird, wobei der Ringraum mit der aushärtbaren Vergussmasse (8) verfüllt wird, wobei das Rohrsegment (3) vor dem Verfüllen des Ringraums mit der Vergussmasse (8) auf dem Baugrund (1) abgestützt wird und wobei die Gründung onshore erfolgt.

## Claims

1. Method for constructing the foundation of a tower structure (2) comprising at least one structure-side connection profile in the form of a pipe segment (3), the pipe segment (3) being partially filled with a curable casting compound (8), **characterized in that** the method comprises the following steps:
- providing a plurality of foundation piles selected from a group comprising pipe profiles, T-profiles, I-profiles, Z-profiles or other foundation piles in the form of sheet pile wall segments (14),
- driving a plurality of foundation piles (4) into a load-bearing ground (1), the method step of driving in being selected from a group comprising vibrating in, ramming in, drilling in or combinations thereof, a plurality of foundation piles being driven into the ground on a circular arc arranged coaxially with respect to the longitudinal axis of the tower structure (2), and
- aligning and fixing the pipe segment (3) coaxially and concentrically with respect to the arrangement of the plurality of foundation piles (4).

2. Method according to claim 1, **characterized in that** the pipe segment (3) is aligned and fixed coaxially and concentrically with respect to a single foundation pile (4) or with respect to the arrangement of foundation piles (4) such that an annular space (6) is formed between the pipe segment (3) and the foundation pile (4) or the foundation piles (4), the annular space (4) being filled with the curable casting compound (8).

3. Method according to either claim 1 or claim 2, **characterized in that** the pipe segment (3) is supported on the foundation piles (4) before being filled with the casting compound (8), and **in that** the pipe segment (3) is provided with a plurality of support brackets (5) by means of which it is supported on the foundation piles (4).

4. Method according to any of claims 1 to 3, **characterized in that** the foundation piles (4) do not comprise flanges.

5. Method according to any of claims 1 to 4, **characterized in that** the pipe segment (3), in the region where it is supported, is underlaid with spacers for the purpose of alignment.

6. Method according to claim 2, **characterized in that** the pipe segment (3) is supported on the ground (1) before the annular space (6) is filled with the casting compound (8).

7. Method according to any of claims 1 to 6, **characterized in that** the diameter of the pipe segment (3) is greater than the diameter of the circular arc enclosed by the foundation piles (4).

8. Method according to any of claims 1 to 7, **characterized in that** the foundation is constructed onshore.

9. Method according to any of claims 1 to 5 or 7 or 8, **characterized in that** the pipe segment (3) is supported on the foundation piles (4) at a distance from the ground (1).

10. Onshore tower structure, constructed using the method according to any of claims 1 to 9, comprising a structure-side connection profile in the form of a pipe segment (3) and a plurality of foundation piles (4) driven into a ground (1), which foundation piles are selected from a group comprising pipe profiles, T-profiles, I-profiles, Z-profiles or other foundation piles in the form of sheet pile wall segments (14), wherein the pipe segment and the plurality of foundation piles surround one another to form an annular space and wherein the pipe segment (3) is at least partially filled with a cured casting compound (8).

11. Onshore structure according to claim 10, **characterized in that** the pipe segment (3) is fastened to the foundation pile or to the foundation piles (4) at a distance from the ground (1) and/or **in that** the pipe segment (3) is supported on the foundation pile(s) (4) by means of support brackets (5).

12. Onshore structure according to either claim 10 or claim 11, **characterized in that** the foundation piles (4) do not comprise flanges.

13. Method for constructing the foundation of a tower structure (2) comprising a structure-side connection profile in the form of a pipe segment (3), wherein the method comprises the following steps:
- providing a foundation pile selected from a group comprising pipe profiles, T-profiles, I-profiles, Z-profiles or providing a foundation pile in the form of sheet pile wall segments (14),
- driving the single foundation pile (4) into a load-bearing ground (1), wherein the method step of driving in is selected from a group comprising vibrating in, ramming in, drilling in or combinations thereof, wherein the single foundation pile (4) is driven into the ground along a longitudinal axis of the tower structure (2),
- aligning and fixing the pipe segment (3) coaxially and concentrically with respect to the single foundation pile (4) introduced into the ground (1) and
- partially filling the pipe segment (3) with a curable casting compound (8),
wherein the pipe segment (3) is aligned and fixed coaxially and concentrically with respect to the single foundation pile (4) such that an annular space is formed between the pipe segment (3) and the single foundation pile (4), wherein the annular space is filled with the curable casting compound (8), wherein the pipe segment (3) is supported on the ground (1) before the annular space is filled with the casting compound (8) and wherein the foundation is constructed onshore.

## Revendications

1. Procédé de réalisation d'une fondation d'une structure de tour (2) comportant au moins un profilé de liaison côté structure sous forme d'un segment tubulaire (3), le segment tubulaire (3) étant en partie rempli d'un coulis durcissable (8), **caractérisé en ce que** le procédé comprend les étapes suivantes :
- la fourniture de plusieurs pieux de fondation choisis dans un groupe comprenant des profilés tubulaires, des profilés en T, des profilés en I, des profilés en Z ou d'autres pieux de fondation sous forme de segments de paroi de palplanches (14),
- l'enfoncement de plusieurs pieux de fondation (4) dans un sol de fondation porteur (1), l'étape d'enfoncement étant choisie dans un groupe comprenant l'introduction par vibration, l'enfoncement, le forage ou des combinaisons de ceux-ci, plusieurs pieux de fondation étant enfoncés dans le sol de fondation sur un arc de cercle disposé coaxialement par rapport à l'axe longitudinal de la structure de tour (2), et
- l'orientation et la fixation du segment tubulaire (3) de manière coaxiale et concentrique par rapport à la disposition de plusieurs pieux de fondation (4).

2. Procédé selon la revendication 1, **caractérisé en ce que** le segment tubulaire (3) est orienté et fixé coaxialement et concentriquement par rapport à un pieu de fondation (4) unique ou par rapport à la disposition de pieux de fondation (4), de sorte qu'un espace annulaire (6) est formé entre le segment tubulaire (3) et le pieu de fondation (4) ou les pieux de fondation (4), l'espace annulaire (4) étant rempli du coulis durcissable (8).

3. Procédé selon l'une des revendications 1 ou 2, **caractérisé en ce que** le segment tubulaire (3) est en appui sur les pieux de fondation (4) avant le remplissage avec le coulis (8), **en ce que** le segment tubulaire (3) est pourvu d'une pluralité de consoles d'appui (5) par l'intermédiaire desquelles un appui sur les pieux de fondation (4) est réalisé.

4. Procédé selon l'une des revendications 1 à 3, **caractérisé en ce que** les pieux de fondation (4) sont conçus sans bride.

5. Procédé selon l'une des revendications 1 à 4, **caractérisé en ce que** le segment tubulaire (3) est soutenu par des entretoises dans la zone de son appui.

6. Procédé selon la revendication 2, **caractérisé en ce que** le segment tubulaire (3) est en appui sur le sol de fondation (1) avant le remplissage de l'espace annulaire (6) avec le coulis (8).

7. Procédé selon l'une des revendications 1 à 6, **caractérisé en ce que** le diamètre du segment tubulaire (3) est supérieur au diamètre de l'arc de cercle entouré par les pieux de fondation (4).

8. Procédé selon l'une des revendications 1 à 7, **caractérisé en ce que** la fondation est réalisée sur terre ferme.

9. Procédé selon l'une des revendications 1 à 5 ou 7 ou 8, **caractérisé en ce que** le segment tubulaire (3) est en appui sur les pieux de fondation (4) à distance du sol de fondation (1).

10. Structure de tour sur terre ferme, réalisée à l'aide du procédé selon l'une des revendications 1 à 9, comprenant un profilé de liaison côté structure sous forme d'un segment tubulaire (3) et plusieurs pieux de fondation (4) enfoncés dans un sol de fondation (1) et choisis dans un groupe comprenant des profilés tubulaires, des profilés en T, des profilés en I, des profilés en Z ou d'autres pieux de fondation sous forme de segments de paroi de palplanches (14), le segment tubulaire et la pluralité de pieux de fondation s'entourant les uns les autres pour former un espace annulaire et le segment tubulaire (3) étant au moins en partie rempli d'un coulis durci (8).

11. Structure de tour sur terre ferme selon la revendication 10, **caractérisée en ce que** le segment tubulaire (3) est fixé au pieu de fondation ou aux pieux de fondation (4) à distance du sol de fondation (1) et/ou **en ce que** le segment tubulaire (3) est en appui sur le ou les pieux de fondation (4) par l'intermédiaire des consoles d'appui (5).

12. Structure de tour sur terre ferme selon l'une des revendications 10 à 11, **caractérisée en ce que** les pieux de fondation (4) sont conçus sans bride.

13. Procédé de réalisation d'une fondation d'une structure de tour (2) comportant un profilé de liaison côté structure sous forme d'un segment tubulaire (3), le procédé comprenant les étapes suivantes :
- la fourniture d'un pieu de fondation choisi dans un groupe comprenant des profilés tubulaires, des profilés en T, des profilés en I, des profilés en Z ou la fourniture d'un pieu de fondation sous forme de segments de paroi de palplanches (14),
- l'enfoncement du pieu de fondation (4) unique dans un sol de fondation porteur (1), l'étape d'enfoncement étant choisie dans un groupe comprenant l'introduction par vibration, l'enfoncement, le forage ou des combinaisons de ceux-ci, le pieu de fondation (4) unique étant enfoncé dans le sol de fondation dans un axe longitudinal de la structure de tour (2),
- l'orientation et la fixation du segment tubulaire (3) de manière coaxiale et concentrique par rapport au pieu de fondation (4) unique introduit dans le sol de fondation (1) et
- le remplissage partiel du segment tubulaire (3) d'un coulis durcissable (8),
selon lequel le segment tubulaire (3) est orienté et fixé coaxialement et concentriquement par rapport au pieu de fondation (4) unique, de sorte qu'un espace annulaire est formé entre le segment tubulaire (3) et le pieu de fondation (4) unique, l'espace annulaire étant rempli du coulis durcissable (8), le segment tubulaire (3) étant en appui sur le sol de fondation (1) avant le remplissage de l'espace annulaire avec le coulis (8), et la fondation étant réalisée sur terre ferme.
